# EUROPEAN PATENT SPECIFICATION

(11) **EP 3 255 786 B1**
(45) Date of publication and mention of the grant of the patent: **24.06.2020**
(21) Application number: 15881256.0
(22) Date of filing: 09.02.2015
(51) Int. Cl.: H02S 20/32, F24S 50/20, F24S 30/452

(54) **SOLAR LIGHT DETECTION DEVICE AND SOLAR LIGHT TRACKER HAVING SAME**
SONNENLICHTDETEKTIONSVORRICHTUNG UND SONNENLICHTVERFOLGER DAMIT
DISPOSITIF DE DÉTECTION DE LUMIÈRE SOLAIRE ET DISPOSITIF DE POURSUITE DE LUMIÈRE SOLAIRE LE COMPORTANT

(30) Priority: 03.02.2015 KR 20150016916
(43) Date of publication of application: 13.12.2017
(73) Proprietor: Sungchang Telecom Co., Ltd., Cheongju-si, Chungcheongbuk-do 361-410 (KR)
(72) Inventor: LEE, Jae Jin, Cheongju-si Chungcheongbuk-do 362-775 (KR)
(74) Representative: Stolmár, Matthias
(86) International application number: PCT/KR2015/001271
(87) International publication number: WO 2016/125938

(56) References cited:
- JP-A- 2004 146 745
- JP-A- 2004 146 745
- KR-A- 20130 014 986
- KR-A- 20130 046 764
- KR-A- 20130 046 764
- KR-A- 20130 130 535
- KR-B1- 100 727 283
- KR-U- 20080 000 278
- KR-U- 20080 000 278

## Description

### [Technical Field]

The present invention relates to a solar light tracker that adjusts altitude and performs horizontal rotation of a solar light collection panel on which a plurality of solar cells are installed to allow the solar light collection panel to face the sun and a solar light detection device that senses solar light, and more particularly, to a solar light detection device in which two or more light sensors that sense solar light are connected in series to adjust altitude of a solar light collection panel and two or more light sensors that sense solar light are connected in series for horizontal rotation of the solar light collection panel to increase a voltage change caused by a resistance difference between the light sensors to increase sensitivity with respect to solar light to increase accuracy of tracking the sun and a solar light tracker including the same.

### [Background Art]

Recently, due to a global energy shortage and environmental pollution, development of echo-friendly alternative energy has been performed. Development and utilization of solar energy has been rapidly performed as one of them. Several apparatuses for using solar energy as the above-described alternative energy, that is, solar (light) cells, solar heating apparatuses and the like have been developed.

The above-described solar energy is not only a source of energy necessary for our daily lives but also a driving force for several atmospheric phenomena or ocean currents in the ocean. In addition, there are solar-heating hot water apparatuses, solar-heated houses, solar furnaces, solar power generators and the like which use solar energy.

Solar energy is a clean, renewable, and infinite energy source. A solar light technology is a systematic technology that converts solar energy. Since there are no mechanical and chemical actions during an energy conversion process, a structure of a system is simple, rarely needs maintenance, has a long life of 20 to 30 years, and is safe and echo-friendly. Also, the scale of power generation may be various from domestic generation to large-scaled generation.

To efficiently utilize solar energy during the above-described development process, solar light trackers that allow a solar energy collection apparatus to track a direction of the sun have been provided.

The above-described solar light tracker may be classified into two types such as a coordinate calculation type in which a driving motor operates according to coordinates calculated by a program to track the sun and a light sensor type in which a driving motor is controlled according to outputting of a signal frequently detected by a light sensor to track the sun.

In the case of the coordinate calculation type, there is an advantage of tracking the sun regardless of a weather condition but there is a difficulty of maintenance because periodical correction operations are necessary due to an accumulation of errors.

The light sensor type is for solving the difficulty of maintenance caused by the periodical correction operations through accumulation of errors of the coordinate calculation type and has a relatively simple structure in which a solar light collection panel moves in an east-west direction by comparing light amounts of two light sensors arranged in the east-west direction with each other and moves in a south-north direction by comparing light amounts of two light sensors arranged in the south-north direction.

However, since the comparison of light amounts using the two light sensors arranged in the east-west direction and the two light sensors arranged in the south-north direction is not accurately performed when it is cloudy or solar light is decreased because the sun is hidden by clouds and the like, it becomes difficult to track the sun. Also, when time passes in this state and a position of the sun is considerably changed, the position of the sun deviates from a trackable range of the solar light tracker and tracking itself is impossible.

JP 2004 146745 A discloses a solar light detection device for a solar light tracker comprising a first adjustment sensor portion comprising two opposite sensors and a second sensor portion comprising two opposite sensors.

### [Disclosure of Invention]

### [Technical Problem]

It is an aspect of the present invention to provide a solar light detection device that accurately detects the sun even when it is cloudy or sensed solar light is decreased because the sun is hidden by clouds and the like in a light sensor type of tracking the sun by sensing solar light.

It is another aspect of the present invention to provide a solar light tracker that accurately tracks the sun even when it is cloudy or sensed solar light is decreased because the sun is hidden by clouds and the like in a light sensor type of tracking the sun by sensing solar light.

Extent of protection of the present invention is defined by the scope of the claims.

### [Technical Solution]

The present invention is defined by a solar light detection device as defined in claim 1 and a solar light tracker as defined in claim 9. According to the present invention, a solar light detection device for a solar light tracker that performs altitude adjustment and horizontal rotation of a solar light collection panel in which a plurality of solar cells are installed to allow the solar light collection panel to face the sun includes an altitude adjustment sensor portion comprising one or more first sensors and one or more second sensors that sense solar light in a direction different from that of the first sensors, in which the first sensors and the second sensors are electrically connected in series and sense solar light to adjust an altitude of the solar light collection panel and a horizontal rotation sensor portion comprising one or more third sensors and one or more fourth sensors that sense solar light in a direction different from that of the third sensors, in which the third sensors and the fourth sensors are electrically connected in series and sense solar light to horizontally rotate the solar light collection panel.

The one or more first sensors are arranged in a first sector formed by a cross-shaped partition that divides a plate into four sectors to be at a first tilt angle and the one or more second sensors are arranged in a second sector symmetrical to the first sector based on a center point of the cross-shaped partition to be at a second tilt angle. Also, the one or more third sensors are arranged in a third sector formed by the cross-shaped partition to be at a third tilt angle and the one or more fourth sensors are arranged in a fourth sector symmetrical to the third sector based on the center point to be at a fourth tilt angle. The first to fourth tilt angles may be 45 degrees.

The solar light detection device may further include a protection cap that covers the cross-shaped partition and the first to fourth sensors with a transparent material transmitting light and is attached to the plate.

The protection cap may include a body portion that has a hollow cylinder shape into which the cross-shaped partition and the first to fourth sensors are inserted and a bottom end coupled with the plate and a foreign substance preventer in a conic shape formed at a top end of the body portion.

A height of the protection cap may be greater than a height of the cross-shaped partition. The height of the cross-shaped partition may be from 10 cm to 30 cm.

At least one of the first sensors and the second sensors and at least one of the third sensors and the fourth sensors may be covered by an optical filter for reducing a light amount of solar light.

The first sensors, the second sensors, the third sensors, and the fourth sensors may be configured as photoconductive sensors with internal resistance values that are reduced according to an increase in a light amount.

A solar light tracker according to the invention that performs altitude adjustment and horizontal rotation of a solar light collection panel in which a plurality of solar cells are installed to allow the solar light collection panel to face the sun includes the solar light detection device, a driving direction controller that outputs an altitude adjustment driving value according to an output voltage caused by resistances of the first sensors and the second sensors and outputs a horizontal rotation driving value according to an output voltage caused by resistances of the third sensors and the fourth sensors, an altitude adjustment driver that adjusts an altitude of a solar light collection panel according to the altitude adjustment driving value, and a horizontal rotation driver that horizontally rotates the solar light collection panel according to the horizontal rotation driving value.

The solar light tracker may further include a night sensor formed at the solar light collection panel to face the sun. Here, the driving direction controller may output a driving value for horizontally rotating the solar light collection panel leftward to the horizontal rotation driver when illuminance of solar light sensed by the night sensor is at or below preset night illuminance.

The driving direction controller may output a driving value for allowing the solar light collection panel to be flush with the ground to the altitude adjustment driver simultaneously with outputting a driving value for horizontally rotating the solar light collection panel leftward to the horizontal rotation driver.

### [Advantageous Effects]

According to embodiments of the present invention, a solar light detection device and a solar light tracker including the same may accurately track the sun even when it is cloudy or solar light is decreased because the sun is hidden by clouds and the like, by connecting sensor that sense solar light in series in a circuit, arranging the sensors to be divided by a cross-shaped partition, and slantly arranging the separately arranged sensors to maximize a difference of incident solar light amounts between the sensors.

### [Brief Description of Drawings]

FIG. 1 is a block diagram of a solar light tracker according to one embodiment of the present invention.
FIG. 2 is a view illustrating circuit configurations of an altitude adjustment sensor portion and a horizontal rotation sensor portion.
FIG. 3 is a perspective view of a solar light detection device.
FIG. 4 is a cross-sectional view of a solar light detection device.
FIG. 5 is a view illustrating a first sensor to a fourth sensor arranged in sectors formed by a cross-shaped partition of the solar light detection device.
FIG. 6 is a view illustrating a first sensor plate at a first tilt angle with a bottom surface of a first sector formed by the cross-shaped partition.
FIG. 7 is a view illustrating resistance changes of one or more third sensors and one or more fourth sensors of the horizontal rotation sensor portion according to a position of the sun at 10 a.m.
FIG. 8 is a view illustrating resistance changes of one or more third sensors and one or more fourth sensors of the horizontal rotation sensor portion according to a position of the sun at noon (12 p.m.).
FIG. 9 is a view illustrating resistance changes of one or more third sensors and one or more fourth sensors of the horizontal rotation sensor portion according to a position of the sun at 6 p.m.
FIG. 10 is a view illustrating an altitude adjustment driver in the solar light tracker according to the embodiment of the present invention.
FIG. 11 is a view illustrating a horizontal rotation driver in the solar light tracker according to the embodiment of the present invention.
FIG. 12 is a view illustrating a solar light detection device and a night sensor mounted on a solar light collection panel.

### [Best Mode for Invention]

Hereinafter, an exemplary embodiment of the present invention will be described in detail with reference to the attached drawings.

The embodiments of the present invention are provided to more completely explain the present invention to one of ordinary skill in the art. The following embodiments may be modified into various different forms, and the scope of the present invention is not limited thereto. The embodiments are provided to make the disclosure more substantial and complete and to completely convey the concept to those skilled in the art.

The terms used herein are to explain particular embodiments. As used herein, singular expressions, unless contextually defined otherwise, may include plural expressions. Also, the terms "comprise" and/or "comprising" are used herein to specify the present of stated shapes, numbers, steps, operations, members, elements, and/or groups thereof but do not preclude the presence or addition of one or more other shapes, numbers, operations, members, elements and/or groups thereof. As used herein, the term "and/or" includes any and all combinations or one of a plurality of associated listed items.

It is obvious that although the terms " first" , " second" , and the like are used herein to describe various members, areas, and/or portions, these members, areas, layers and/or portions are not limited by these terms. These terms do not mean particular order, top and bottom, or ratings and are used only to distinguish one member, area, or portion from another member, area, or portion. Accordingly, a first member, area, or portion which will be described below may be referred to as a second member, area, or portion without departing from the scope of the present invention.

Hereinafter, the embodiments of the present invention will be described with reference to the drawings which schematically illustrate the embodiments. In the drawings, for example, depending on a manufacturing technology and/or tolerance, modifications of illustrated shapes may be devised. Accordingly, it should be understood that the embodiments of the present invention are not limited to particular shapes of area shown in the specification and may include, for example, changes in shape caused during a manufacturing process.

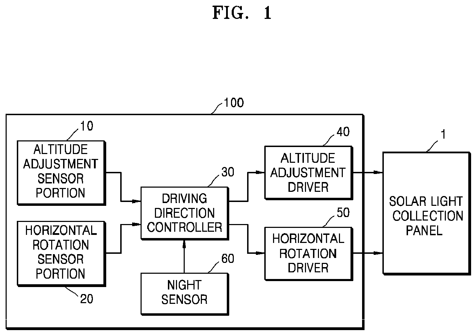

FIG. 1 is a block diagram of a solar light tracker according to one embodiment of the present invention.

Referring to FIG. 1, a solar light tracker 100 according to one embodiment of the present invention may include an altitude adjustment sensor portion 10 that senses solar light to adjust altitude of a solar light collection panel 1 in which a plurality of solar cells are installed, a horizontal rotation sensor portion 20 that senses solar light for horizontal rotation of the solar light collection panel 1, a driving direction controller 30 that outputs a driving value for the altitude adjustment and the horizontal rotation of the solar light collection panel 1 according to an output voltage of the altitude adjustment sensor portion 10 and an output voltage of the horizontal rotation sensor portion 20, an altitude adjustment driver 40, and a horizontal rotation driver 50 to perform the altitude adjustment and the horizontal rotation of the solar light collection panel 1 to allow the solar light collection panel 1 to face the sun.

Here, an altitude adjusted by the altitude adjustment driver 40 used in the embodiment of the present invention does not refer to generally used content, that is, a height of a celestial body measured based on the horizon but should be understood as referring to an angle between the solar light collection panel 1 and the horizon and may have a range between 0 to 90 degrees.

The altitude adjustment sensor portion 10 may include one or more first sensors that directly face the sun and one or more second sensors that sense solar light in a direction different from that of the first sensors and may be configured by electrically connecting the first sensors and the second sensors in series.

The horizontal rotation sensor portion 20 may include one or more third sensors that directly face the sun and one or more fourth sensors that sense solar light in a direction different from that of the first sensors and may be configured by electrically connecting the third sensors and the fourth sensors in series.

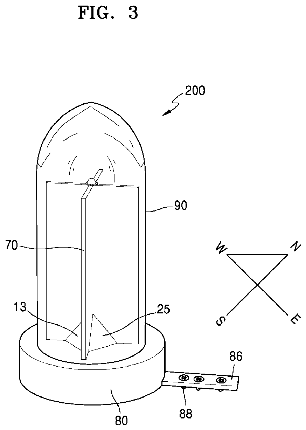

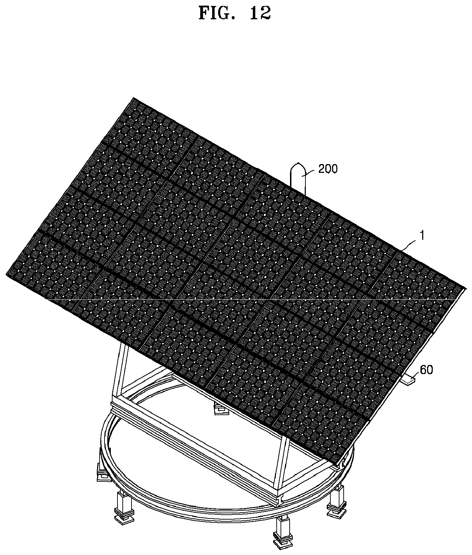

The altitude adjustment sensor portion 10 and the horizontal rotation sensor portion 20 are included in a solar light detection device 200 as shown in FIG. 3 and may be attached to the solar light collection panel 1 to directly face the sun as shown in FIG. 12. The solar light detection device 200 will be described below.

The driving direction controller 30 outputs the altitude adjustment driving value according to the output voltage of the altitude adjustment sensor portion 10 caused by resistances of the first sensors and the second sensors and outputs the horizontal rotation driving value according to the output voltage of the horizontal rotation sensor portion 20 caused by resistances of the third sensors and the fourth sensors.

The altitude adjustment driver 40 adjusts an altitude of the solar light collection panel 1 according to the altitude adjustment driving value of the driving direction controller 30. Driving power of the altitude adjustment driver 40 may be supplied from the solar cells of the solar light collection panel 1.

The horizontal rotation driver 50 performs horizontal rotation of the solar light collection panel 1 according to the horizontal rotation driving value of the driving direction controller 30. Driving power of the horizontal rotation driver 50 may be supplied from the solar cells of the solar light collection panel 1.

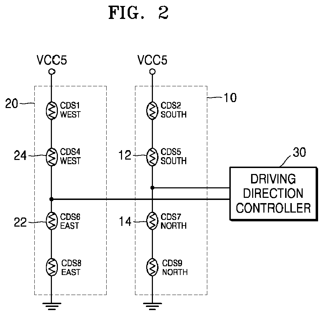

FIG. 2 is a view illustrating circuit configurations of the altitude adjustment sensor portion and the horizontal rotation sensor portion.

Referring to FIG. 2, the altitude adjustment sensor portion 10 is formed by connecting two first sensors 12 and two second sensors 14 in series. Also, the horizontal rotation sensor portion 20 is formed by connecting two third sensors 22 and two fourth sensors 24 in series. Here, the first sensors 12, the second sensors 14, the third sensors 22, and the fourth sensors 24 may be photoconductive sensors. The photoconductive sensors are sensors having internal resistances changeable according to a light amount, in which the internal resistances are reduced as the light amount increases and are increased when the light amount is reduced. As types of the photoconductive sensors, there are CdS sensors, PbS sensors and the like.

That is, the altitude adjustment sensor portion 10 increases resolution by maximizing a solar light sensing sensitivity difference between the first sensors 12 and the second sensors 14 due to a structure thereof in which the first sensors 12 and the second sensors 14 are connected in series and the horizontal rotation sensor portion 20 increases resolution by maximizing a solar light sensing sensitivity difference between the third sensors 22 and the fourth sensors 24 due to a structure thereof in which the third sensors 22 and the fourth sensors 24 are connected in series.

The altitude adjustment sensor portion 10 and the horizontal rotation sensor portion 20, as shown in FIGS. 3 to 6, may be structurally included in the solar light detection device 200 and mounted on the solar light collection panel 1.

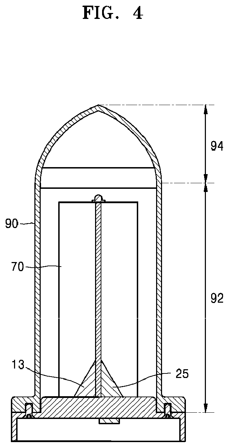

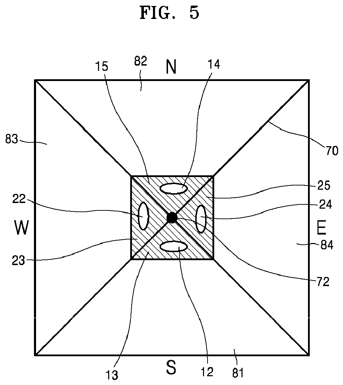

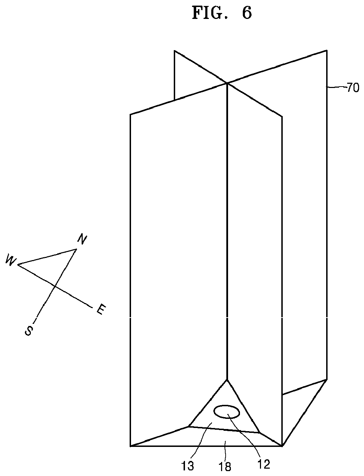

FIG. 3 is a perspective view of the solar light detection device 200 according to the embodiment of the present invention, FIG. 4 is a cross-sectional view of the solar light detection device (other parts except a plate 80 and a fixing member 86 for attaching the solar light detection device to the solar light collection panel in FIG. 3), FIG. 5 is a view illustrating the first sensor to the fourth sensor arranged in sectors formed by a cross-shaped partition of the solar light detection device, and FIG. 6 is a view illustrating a first sensor plate 13 having a first tilt angle with respect to a bottom surface of a first sector 81 formed by the cross-shaped partition.

The solar light detection device 200 includes the plate 80, a cross-shaped partition 70 formed at the plate 80, sectors 81, 82, 83, and 84 formed by the cross-shaped partition 70, the first sensor plate 13 disposed at a first tilt angle with respect to the bottom surface of the sector 81 (hereinafter, referred to as a first sector 81), a second sensor plate 15 disposed at a second tilt angle with respect to a bottom surface of the sector 82 (hereinafter, referred to as a second sector 82), a third sensor plate 23 disposed at a third tilt angle with respect to a bottom surface of the sector 83 (hereinafter, referred to as a third sector 83), a fourth sensor plate 25 disposed at a fourth tilt angle with respect to a bottom surface of the sector 84 (hereinafter, referred to as a fourth sector 84), the one or more first sensors 12 that are formed on the first sensor plate 13 and sense solar light incident from below (south) based on a front direction of the solar light collection panel 1, the one or more second sensors 14 that are formed on the second sensor plate 15 and sense solar light incident from above (north) based on the front direction of the solar light collection panel 1, the one or more third sensors 22 that are formed on the third sensor plate 23 and sense solar light incident from left (east) based on the front direction of the solar light collection panel 1, the one or more fourth sensors 24 that are formed on the fourth sensor plate 25 and sense solar light incident from right (west) based on the front direction of the solar light collection panel 1, a fixing member 86 fixed to a side of the plate 80 and coupled with the solar light collection panel 1, and a protection cap 90 that covers the cross-shaped partition 70 and the first to fourth sensors 12, 14, 22, and 24 with a transparent material that transmits light and has a bottom end coupled with the plate 80.

Also, the first sensors are arranged to face south (S) among four directions, the second sensors 14 are arranged to face north (N) among four directions, the third sensors 22 are arranged to face west (W) among four directions, and the fourth sensors 24 are arranged to face east (E) among four directions. For this, the cross-shaped partition 70 has an X shape based on four directions (refer to FIG. 5).

Here, the first sector 81 and the second sector 82 are symmetrically arranged based on a center point 72 of the cross-shaped partition 70 and the third sector 83 and the fourth sector 84 are symmetrically arranged based on the center point 72 of the cross-shaped partition 70.

The cross-shaped partition 70 may have a light absorption material that does not reflect or scatter light. That is, when solar light is incident on any sector, the cross-shaped partition 70 forms a shade at a symmetrical sector based on the center point 72 of the cross-shaped partition 70. For example, when solar light is incident on the first sector 81, that is, solar light is incident on a lower side of the solar light collection panel 1 (south), the cross-shaped partition 70 forms a shade at the second sector 82. Due to this, a difference between resistances of the one or more first sensors 12 arranged in the first sector 81 and the one or more second sensors 14 arranged in the second sector 82 is further increased.

That is, a resistance value obtained by the one or more first sensors 12 arranged in the first sector is deceased and a resistance value of the second sector 82 is relatively increased. Accordingly, a voltage value obtained by the one or more first sensors 12 is increased and a voltage value obtained by the one or more second sensors 14 is decreased. As a result, since a difference between light amounts between sectors symmetrical to each other is maximized due to a structure of the cross-shaped partition 70 and resolution is increased thereby, the driving direction controller 30 may determine a precise incident direction of solar light to increase accuracy of tracking the sun.

In addition to the above-described structure of the cross-shaped partition 70, the one or more sensors arranged in each of the sectors may be arranged to tilt to the bottom surface of each of the sectors to further increase resolution by further maximizing the difference between the light amounts of the symmetrical sectors.

That is, the one or more first sensors 12 may be formed at the first sensor plate 13 at the first tilt angle with the bottom surface of the first sector 81, the one or more second sensors 14 may be formed at the second sensor plate 15 at the second tilt angle with the bottom surface of the second sector 82, the one or more third sensors 22 may be formed at the third sensor plate 23 at the third tilt angle with the bottom surface of the third sector 83, and the one or more fourth sensors 24 may be formed at the fourth sensor plate 25 at the fourth tilt angle with the bottom surface of the fourth sector 84.

Here, the first tilt angle, the second tilt angle, the third tilt angle, and the fourth tilt angle may be all the same or may be different from one another. When the first tilt angle, the second tilt angle, the third tilt angle, and the fourth tilt angle are all the same, they may be 45 degrees but are not limited thereto.

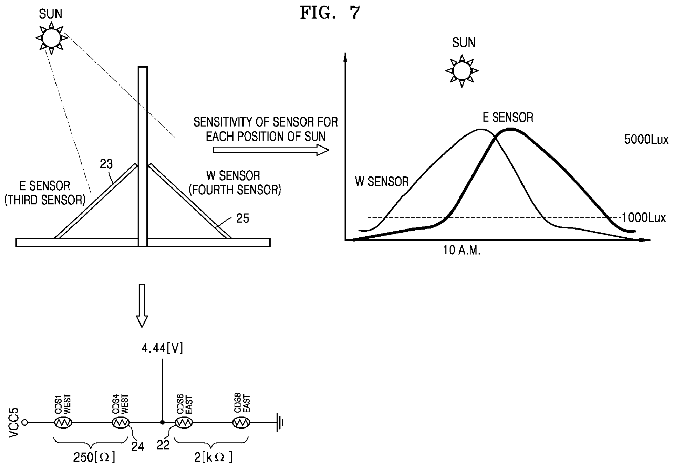

As described above, with the structure of the cross-shaped partition 70, the structure in which the sensors are slantly arranged at the sectors, and the structure in which the sensors that sense in corresponding directions are connected in series on circuit, the resistance changes between the one or more third sensors and the one or more fourth sensors are shown in FIGS. 7 to 9.

FIG. 7 is a view illustrating resistance changes of the one or more third sensors 22 and the one or more fourth sensors 24 of the horizontal rotation sensor portion according to a position of the sun at 10 a.m. Since the sun is positioned in the left of the solar light collection panel (east) at 10 a.m., a lot of solar light is incident on the one or more third sensors 22. Accordingly, a resistance value obtained by the one or more third sensors 22 is reduced and a resistance value obtained by the one or more fourth sensors 24 relatively increases.

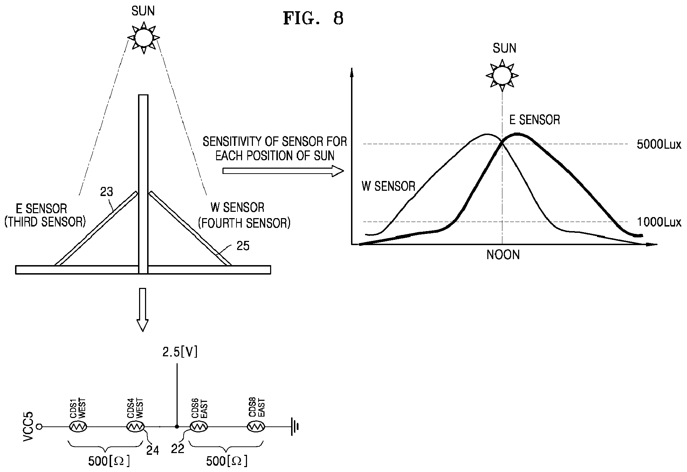

FIG. 8 is a view illustrating resistance changes of the one or more third sensors 22 and the one or more fourth sensors 24 of the horizontal rotation sensor portion according to a position of the sun at noon (12 p.m.). Since the sun faces the solar light collection panel, the same light amounts of solar light are incident on the one or more third sensors 22 and the one or more fourth sensors 24. A resistance value obtained by the one or more third sensors 22 and a resistance value obtained by the one or more fourth sensors 24 are identical to each other.

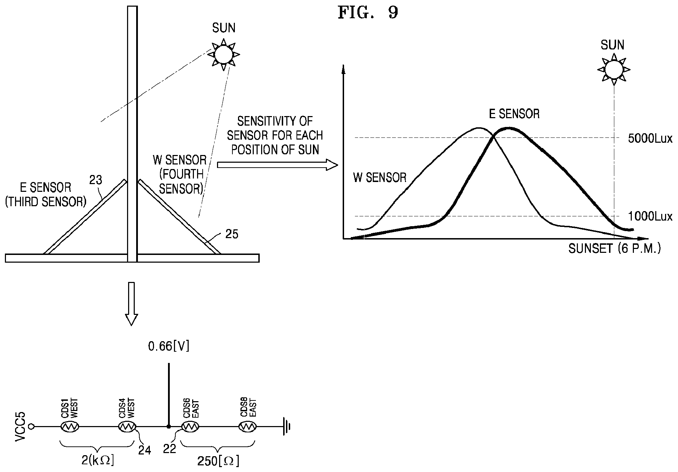

FIG. 9 is a view illustrating resistance changes of the one or more third sensors 22 and the one or more fourth sensors 24 of the horizontal rotation sensor portion according to a position of the sun at 6 p.m. Since the sun is positioned in the right of the solar light collection panel (west) at 6 p.m., a lot of solar light is incident on the one or more fourth sensors 24. Accordingly, a resistance value obtained by the one or more fourth sensors 24 is reduced and a resistance value obtained by the one or more third sensors 22 relatively increases.

Meanwhile, the plate 80 and the fixing member 86 may have light absorption materials that do not reflect or scatter light.

Also, although the fixing member 86 may be coupled with the solar light collection panel 1 by a screw 88, means used for coupling with the solar light collection panel 1 is not limited thereto.

Meanwhile, in FIGS. 3 and 4, the protection cap 90 may be formed of a transparent material that transmits light and includes a body portion 92 that has a hollow cylinder structure to allow the cross-shaped partition 70 and the first to fourth sensors 12, 14, 22, and 24 are inserted and a foreign substance preventer 94 having a conic shape formed at a top end of the body portion 92.

Here, the bottom end of the body portion 92 may be coupled with the plate 80 using a screw and the like.

A height of the protection cap 90 may be greater than a height of the cross-shaped partition 70. Particularly, the height of the cross-shaped partition 70 may be 10 cm to 30 cm considering mechanical vibrations of the solar light tracker itself but is not limited thereto. Likewise, the height of the protection cap 90 may be restricted considering mechanical vibrations of the solar light tracker itself.

Also, since the foreign substance preventer 94 of the protection cap 90 has a conic shape with a pointed end, foreign substances such as snow and the like well move and do not accumulate on the foreign substance preventer 94. Also, since solar light is incident on the first to fourth sensors through the foreign substance preventer 94 of the protection cap 90 even when foreign substances accumulate on the body portion 92 of the protection cap 90, it is possible to track the sun. That is, even when snow falls, it is possible to accurately track the sun.

Meanwhile, at least one of the one or more first sensors 12 and the one or more second sensors 14 and at least one of the one or more third sensors 22 and the one or more fourth sensors 24 may be covered by an optical filter for reducing a light amount of solar light. It considers a case in which the first sensors 12, the second sensors 14, the third sensors 22, and the fourth sensors 24 are configured as photoconductive sensors. Photoconductive sensors have a narrow linear area and a broad saturation area. Due to this, when a light amount deviates from the linear area, photoconductive sensors enter a saturation area state in such a way that a light amount of solar light is not normally performed. Eventually, it may be accurately performed to track the sun. To prevent this, at least one of the sensors is covered by the optical filter for reducing the light amount of solar light.

Meanwhile, referring to FIGS. 1 and 12, the solar light tracker according to the embodiment of the present invention may further include a night sensor 60 formed at the solar light collection panel 1 to face the sun.

The driving direction controller 30 may output a driving value for horizontally rotating the solar light collection panel 1 leftward (east) to the horizontal rotation driver 50 when illuminance of solar light sensed by the night sensor 60 is at or below preset night illuminance or may output a driving value for allowing the solar light collection panel 1 to be flush with the ground to the altitude adjustment driver 40 simultaneously with outputting the driving value for horizontally rotating the solar light collection panel 1 leftward to the horizontal rotation driver 50.

Here, the preset night illuminance may be 10 Lux but is not limited thereto.

Also, a reason of outputting the driving value for allowing the solar light collection panel 1 to be flush with the ground from the driving direction controller 30 to the altitude adjustment driver 40 is to lay the solar light collection panel 1 on the ground to be flush therewith to prevent the solar light tracker from being damaged at equipment thereof by strong wind.

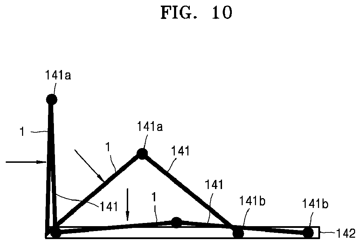

FIG. 10 is a view illustrating the altitude adjustment driver in the solar light tracker according to the embodiment of the present invention.

The altitude adjustment driver 40 may be variously configured to operate according to a driving signal of the driving direction controller 30 to adjust the altitude of the solar light collection panel 1 by vertically rotating the solar light collection panel 1. Referring to FIG. 10, the altitude adjustment driver 40 includes a supporter 141 and a linear actuator 142 and the linear actuator 142 may be driven by a driving motor (not shown). The supporter 141 and the solar light collection panel 1 are coupled by a first coupling shaft 141a to be pivotable and the supporter 141 and the linear actuator 142 are coupled by a second coupling shaft 141b to be pivotable.

Accordingly, when the linear actuator 142 linearly moves leftward and rightward, the altitude of the solar light collection panel 1 is adjusted through the supporter 141 connected to the second coupling shaft 141b. The altitude of the solar light collection panel 1 is adjusted from 0 to maximally 90 degrees by the altitude adjustment driver 40.

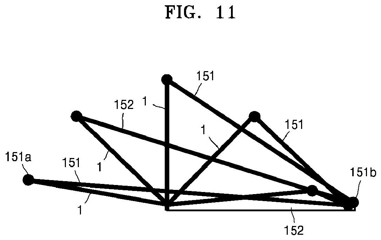

FIG. 11 is a view illustrating the horizontal rotation driver in the solar light tracker according to the embodiment of the present invention.

The horizontal rotation driver 50 may be variously configured to operate according to a driving signal of the driving direction controller 30 to adjust a rotation direction of the solar light collection panel 1 by rotating the solar light collection panel 1 clockwise or counterclockwise. Referring to FIG. 11, the horizontal rotation driver 50 includes a supporter 151 and a linear actuator 152 and the linear actuator 152 may be driven by a driving motor (not shown). The supporter 151 and the solar light collection panel 1 are coupled by a first coupling shaft 151a to be pivotable and the supporter 151 and the linear actuator 152 are coupled by a second coupling shaft 151b to be pivotable.

Accordingly, when the linear actuator 152 linearly moves leftward and rightward, the horizontal rotation of the solar light collection panel 1 is adjusted through the supporter 151 connected to the second coupling shaft 151b. The solar light collection panel 1 is horizontally rotated by the horizontal rotation driver 150 from 0 to maximally 180 degrees. Also, a horizontal rotation angle of the solar light collection panel 1 is limited from 0 to 180 degrees through a linear movement of the linear actuator 152 and an operation of the supporter 151 connected to the linear actuator 152 through the second coupling shaft 151b, thereby preventing the solar light tracker 100 from being damaged at equipment thereof.

While the embodiments of the present invention have been described above, it should be understood by one of ordinary skill in the art that modifications may be made without departing from the essential features of the present invention. Therefore, the disclosed embodiments should be considered not in a limitative point of view but in a descriptive point of view. Accordingly, it should be understood that the scope of the present invention is defined by the scope of the claims.

### [Industrial Applicability]

The present invention is applicable to a solar light tracker.

## Claims

1. A solar light detection device for a solar light tracker (100) that performs altitude adjustment and horizontal rotation of a solar light collection panel in which a plurality of solar cells are installed to allow the solar light collection panel to face the sun, the solar light detection device comprising:
an altitude adjustment sensor portion (10) comprising one or more first sensors (12) and one or more second sensors (14) that sense solar light in a direction different from that of the first sensors (12); wherein the one or more first sensors (12) are arranged in a first sector (81) formed by a cross-shaped partition (70) that divides a plate into four sectors (81, 82, 83, 84) and the one or more second sensors (14) are arranged in a second sector (82) symmetrical to the first sector (81) based on a center point of the cross-shaped partition (70), and
a horizontal rotation sensor portion (20) comprising one or more third sensors (22) and one or more fourth sensors (24) that sense solar light in a direction different from that of the third sensors (22), wherein the one or more third sensors (22) are arranged in a third sector (83) formed by the cross-shaped partition (70) and the one or more fourth sensors (24) are arranged in a fourth sector (84) symmetrical to the third sector (83) based on the center point,
**characterized in that**
the first sensors (12) and the second sensors (14) are electrically connected in series and sense solar light to adjust an altitude of the solar light collection panel,
the third sensors (22) and the fourth sensors (24) are electrically connected in series and sense solar light to horizontally rotate the solar light collection panel,
wherein the one or more first sensors (12) are arranged to be at a first tilt angle and the one or more second sensors (14) are arranged to be at a second tilt angle, and
wherein the one or more third sensors (22) are arranged to be at a third tilt angle and the one or more fourth sensors (24) are arranged to be at a fourth tilt angle.

2. The solar light detection device of claim 1, wherein the first to fourth tilt angles are 45 degrees.

3. The solar light detection device of claim 1, further comprising a protection cap that covers the cross-shaped partition (70) and the first to fourth sensors (24) with a transparent material transmitting light and is attached to the plate.

4. The solar light detection device of claim 3, wherein the protection cap comprises:
a body portion that has a hollow cylinder shape into which the cross-shaped partition (70) and the first to fourth sensors (24) are inserted and a bottom end coupled with the plate; and
a foreign substance preventer in a conic shape formed at a top end of the body portion.

5. The solar light detection device of claim 4, wherein a height of the protection cap is greater than a height of the cross-shaped partition (70).

6. The solar light detection device of claim 5 wherein the height of the cross-shaped partition (70) is from 10 cm to 30 cm.

7. The solar light detection device of claim 1, wherein at least one of the first sensors (12) and the second sensors (14) and at least one of the third sensors (22) and the fourth sensors (24) are covered by an optical filter for reducing a light amount of solar light.

8. The solar light detection device of claim 1, wherein the first sensors (12), the second sensors (14), the third sensors (22), and the fourth sensors (24) are configured as photoconductive sensors with internal resistance values that are reduced according to an increase in a light amount.

9. A solar light tracker (100) comprising:
the solar light detection device according to any one of claims 1 to 8;
a driving direction controller (30) that outputs an altitude adjustment driving value according to an output voltage caused by resistances of the first sensors (12) and the second sensors (14) and outputs a horizontal rotation driving value according to an output voltage caused by resistances of the third sensors (22) and the fourth sensors (24);
an altitude adjustment driver (40) that adjusts an altitude of a solar light collection panel according to the altitude adjustment driving value; and
a horizontal rotation driver (50) that horizontally rotates the solar light collection panel according to the horizontal rotation driving value.

10. The solar light tracker (100) of claim 9, further comprising a night sensor (60) formed at the solar light collection panel to face the sun,
wherein the driving direction controller (30) outputs a driving value for horizontally rotating the solar light collection panel leftward to the horizontal rotation driver (50) when illuminance of solar light sensed by the night sensor (60) is at or below preset night illuminance.

11. The solar light tracker (100) of claim 9, wherein the driving direction controller (30) outputs a driving value for allowing the solar light collection panel to be flush with the ground to the altitude adjustment driver (40) simultaneously with outputting a driving value for horizontally rotating the solar light collection panel leftward to the horizontal rotation driver (50).

## Patentansprüche

1. Eine Vorrichtung zur Detektion von Sonnenlicht für einen Sonnenlicht-Tracker (100), der für eine Höheneinstellung und horizontale Drehung eines Sonnenlicht-Kollektorpanels sorgt, in dem mehrere Sonnenzellen installiert sind, damit das Sonnenlicht-Kollektorpanel der Sonne zugewandt ist, wobei die Vorrichtung zur Detektion von Sonnenlicht Folgendes umfasst:
einen Sensorabschnitt zur Höhenanpassung (10), der einen oder mehrere erste Sensoren (12) und einen oder mehrere zweite Sensoren (14) umfasst, die das Sonnenlicht in einer Richtung erfassen, die sich von der Richtung der ersten Sensoren (12) unterscheidet, wobei ein erster oder mehrere erste Sensoren (12) in einem ersten Abschnitt (81) angeordnet sind, der durch eine kreuzförmige Aufteilung (70) gebildet ist, die eine Platte in vier Abschnitte (81, 82, 83, 84) trennt, und wobei ein oder mehrere zweite Sensoren (14) in einem zweiten Abschnitt (82) angeordnet sind, der basierend auf einem Mittelpunkt der kreuzförmigen Aufteilung (70) zum ersten Abschnitt (81) symmetrisch ist, und
einen Sensorabschnitt zur horizontalen Rotation (20), der einen oder mehrere dritte Sensoren (22) und einen oder mehrere vierte Sensoren (24) umfasst, die das Sonnenlicht in einer Richtung erfassen, die sich von der Richtung der dritten Sensoren (22) unterscheidet, wobei ein oder mehrere dritte Sensoren (22) in einem dritten Abschnitt (83) angeordnet sind, der durch eine kreuzförmige Aufteilung (70) gebildet ist, und wobei ein oder mehrere vierte Sensoren (24) in einem vierten Abschnitt (84) angeordnet sind, der basierend auf dem Mittelpunkt zum dritten Abschnitt (83) symmetrisch ist,
**gekennzeichnet dadurch,**
**dass** die ersten Sensoren (12) und die zweiten Sensoren (14) elektrisch in Reihe geschaltet sind, und die Höhe des Sonnenlicht-Kollektorpanels einstellen, somit das Sonnenlicht erfasst wird,
**dass** die dritten Sensoren (22) und die vierten Sensoren (24) elektrisch in Reihe geschaltet sind, und die Höhe das Sonnenlicht-Kollektorpanel horizontal drehen, somit das Sonnenlicht erfasst wird,
wobei ein oder mehrere erste Sensoren (12) in einem ersten Neigungswinkel angeordnet und ein oder mehrere zweite Sensoren (14) in einem zweiten Neigungswinkel angeordnet sind, und
wobei ein oder mehrere dritte Sensoren (22) in einem dritten Neigungswinkel angeordnet und ein oder mehrere vierte Sensoren (24) in einem vierten Neigungswinkel angeordnet sind.

2. Vorrichtung zur Detektion von Sonnenlicht nach Anspruch 1, wobei der erste Neigungswinkel bis zum vierten Neigungswinkel 45 Grad betragen.

3. Vorrichtung zur Detektion von Sonnenlicht nach Anspruch 1, ferner umfassend ein lichtdurchlässiges transparentes Material und eine Schutzabdeckung, welche den ersten Sensor bis zum vierten Sensor (24) und die kreuzförmige Aufteilung (70) abdeckt, und an die Platte befestigt ist.

4. Vorrichtung zur Detektion von Sonnenlicht nach Anspruch 3, wobei die Schutzabdeckung Folgendes erfasst:
einen Körperabschnitt mit einer Hohlzylinderform und einem mit der Platte, kombinierten Basisende, in dem die kreuzförmige Kammer (70) und der erste Sensor bis zum vierten Sensor (24) angeordnet sind, und
ein kegelförmiger Fremdmaterial-Inhibitor, der an einem oberen Ende des Körperabschnittes gebildet ist.

5. Vorrichtung zur Detektion von Sonnenlicht nach Anspruch 4, wobei eine Höhe der Schutzabdeckung größer als eine Höhe der kreuzförmigen Kammer (70) ist.

6. Vorrichtung zur Detektion von Sonnenlicht nach Anspruch 5, wobei die Höhe der kreuzförmigen Kammer (70) 10 cm bis 30 cm ist.

7. Vorrichtung zur Detektion von Sonnenlicht nach Anspruch 1, wobei mindestens einer der ersten Sensoren (12) und der zweiten Sensoren (14) und mindestens einer der dritten Sensoren (22) und der vierten Sensoren (24) mit einem optischen Filter bedeckt, das eine Lichtmenge des Sonnenlichts reduziert.

8. Vorrichtung zur Detektion von Sonnenlicht nach Anspruch 1, wobei die ersten Sensoren (12), die zweiten Sensoren (14), die dritten Sensoren (22) und die vierten Sensoren (24) als photoleitende Sensoren mit durch eine Erhöhung der Lichtmenge verringerten Innenwiderstandswerten konfiguriert sind.

9. Ein Sonnenlicht-Tracker (100), der Folgendes umfasst:
Vorrichtung zur Detektion von Sonnenlicht nach einem der Ansprüche 1 bis 8,
eine Antriebsrichtungssteuereinheit (30), die einen Antriebswert für die Höheneinstellung nach der Ausgangsspannung ausgibt, welche durch die Widerstände der ersten Sensoren (12) und der zweiten Sensoren (14) verursacht wird, und einen Antriebswert für horizontale Drehung relativ zu einer Ausgangsspannung ausgibt, welche durch die Widerstände der dritten Sensoren (22) und der vierten Sensoren (14) verursacht wird,
ein Höheneinstellantriebselement (40), das eine Höhe eines Sonnenlicht-Kollektorpanels nach dem Höheneinstellantriebswert einstellt, und
ein horizontales Rotationsantriebselement (50), das das Sonnenlicht-Kollektorpanel nach dem horizontalen Rotationsantriebswert horizontal dreht.

10. Sonnenlicht-Tracker (100) nach Anspruch 9, ferner umfassend einen Nachtsensor (60), der in dem Sonnenlicht-Kollektorpanel ausgebildet ist, um der Sonne zugewandt zu sein,
wobei die Antriebsrichtungssteuereinheit (30) einen Antriebswert für das horizontale Rotationsantriebselement (50) ausgibt, um das Sonnenlicht-Kollektorpanel horizontal nach links zu drehen, wenn das vom Nachtsensor (60) wahrgenommene Sonnenlicht auf oder unter dem gegenwärtigen Nachtlicht liegt.

11. Sonnenlicht-Tracker (100) nach Anspruch 9, wobei die Antriebsrichtungssteuereinheit (30) gleichzeitig mit der Ausgabe eines Antriebswertes für das horizontale Rotationsantriebselement (50), um das Sonnenlicht-Kollektorpanel horizontal nach links zu drehen, einen Antriebswert für das Antriebselement (40) zur Bodenhöhenverstellung ausgibt, um dafür zu sorgen, dass das Sonnenlicht-Kollektorpanel in der gleichen Höhe wie der Boden liegt.

## Revendications

1. Dispositif de détection de lumière solaire pour un suiveur de lumière solaire (100) qui effectue un ajustement d'altitude et une rotation horizontale d'un panneau de collecte de lumière solaire dans lequel une pluralité de cellules solaires est installée pour permettre au panneau de collecte de lumière solaire de faire face au soleil, le dispositif de détection de lumière solaire comprenant :
Une partie de capteur de réglage d'altitude (10) comprenant un ou plusieurs premiers capteurs (12) et un ou plusieurs seconds capteurs (14) qui détectent la lumière solaire dans une direction différente de celle des premiers capteurs (12);
dans laquelle le ou les premiers capteurs (12) sont disposés dans un premier secteur (81) formé par une cloison en forme de croix (70) qui divise une plaque en quatre secteurs (81, 82, 83, 84) et le ou les seconds capteurs (14) sont disposés dans un second secteur (82) symétrique au premier secteur (81) sur la base d'un point central de la cloison en forme de croix (70), et
Une partie de capteur de rotation horizontale (20) comprenant un ou plusieurs troisièmes capteurs (22) et un ou plusieurs quatrièmes capteurs (24) qui détectent la lumière solaire dans une direction différente de celle des troisièmes capteurs (22), dans laquelle le ou les troisièmes capteurs (22) sont disposés dans un troisième secteur (83) formé par la cloison en forme de croix (70) et le ou les quatrièmes capteurs (24) sont disposés dans un quatrième secteur (84) par rapport au troisième secteur (83) basé sur le point central,
**Caractérisé par le fait que**
Les premiers capteurs (12) et les seconds capteurs (14) sont connectés électriquement en série et détectent la lumière solaire pour ajuster une altitude du panneau de collecte de la lumière solaire,
Les troisièmes capteurs (22) et les quatrièmes capteurs (24) sont connectés électriquement en série et détectent la lumière solaire pour faire tourner horizontalement le panneau de collecte de la lumière solaire,
Dans laquelle le ou les premiers capteurs (12) sont disposés de manière à se trouver à un premier angle d'inclinaison et le ou les seconds capteurs (14) sont disposés de manière à se trouver à un second angle d'inclinaison, et
Dans lequel le ou les troisième(s) capteur(s) (22) sont disposés pour être à un troisième angle d'inclinaison et le ou les quatrième(s) capteur(s) (24) sont disposés pour être à un quatrième angle d'inclinaison.

2. Le dispositif de détection de la lumière solaire de la revendication 1, dans lequel les premier à quatrième angles d'inclinaison sont de 45 degrés.

3. Le dispositif de détection de lumière solaire de la revendication 1, comprenant en outre un capuchon de protection qui recouvre la cloison en forme de croix (70) et les premier à quatrième capteurs (24) avec un matériau transparent transmettant la lumière et est fixé à la plaque.

4. Le dispositif de détection de la lumière solaire de la revendication 3, dont le capuchon de protection est constitué :
Une partie du corps qui a une forme de cylindre creux dans lequel la cloison en forme de croix (70) et les premier à quatrième capteurs (24) sont insérés et une extrémité inférieure couplée à la plaque; et
Un obturateur de substance étrangère dans une forme conique formée au niveau d'une extrémité supérieure de la partie de corps.

5. Le dispositif de détection de la lumière solaire de la revendication 4, dans lequel une hauteur du capuchon de protection est supérieure à une hauteur de la cloison en forme de croix (70).

6. Le dispositif de détection de la lumière solaire de la revendication 6, dans lequel la hauteur de la cloison en forme de croix (70) est de 10 cm à 30 cm.

7. Le dispositif de détection de lumière solaire selon la revendication 1, dans lequel au moins un des premiers capteurs (12) et des deuxièmes capteurs (14) et au moins un des troisièmes capteurs (22) et des quatrièmes capteurs (24) sont couverts par un filtre optique pour réduire une quantité de lumière solaire.

8. Le dispositif de détection de lumière solaire selon la revendication 1, dans lequel les premiers capteurs (12), les deuxièmes capteurs (14), les troisièmes capteurs (22) et les quatrièmes capteurs (24) sont configurés comme des capteurs photoconducteurs avec des valeurs de résistance interne qui sont réduites en fonction d'une augmentation de la quantité de lumière.

9. Un suiveur de lumière solaire (100) comprenant :
Le dispositif de détection de la lumière solaire selon l'une des revendications 1 à 8;
Un contrôleur de direction de conduite (30) qui fournit une valeur d'entraînement de réglage d'altitude en fonction d'une tension de sortie causée par les résistances des premiers capteurs (12) et des deuxièmes capteurs (14) et fournit une valeur d'entraînement de rotation horizontale en fonction d'une tension de sortie causée par les résistances des troisièmes capteurs (22) et des quatrièmes capteurs (24) ;
Un dispositif de commande de réglage d'altitude (40) qui ajuste une altitude d'un panneau de collecte de lumière solaire en fonction de la valeur de commande de réglage d'altitude; et
Un dispositif d'entraînement à la rotation horizontale (50) qui fait tourner horizontalement le panneau de collecte de la lumière solaire en fonction de la valeur de l'entraînement à la rotation horizontale.

10. Le suiveur de lumière solaire (100) de la revendication 9, comprenant en outre un capteur de nuit (60) formé au niveau du panneau de collecte de la lumière solaire pour faire face au soleil,
Dans lequel le contrôleur de direction de conduite (30) fournit une valeur de conduite pour la rotation horizontale du panneau de collecte de la lumière solaire vers la gauche au conducteur de rotation horizontale (50) lorsque l'éclairement de la lumière solaire détectée par le capteur de nuit (60) est égal ou inférieur à l'éclairement nocturne préréglé.

11. Le suiveur de lumière solaire (100) de la revendication 9, dans lequel le contrôleur de direction de conduite (30) émet une valeur de conduite pour permettre au panneau de collecte de lumière solaire d'être au ras du sol vers le conducteur de réglage d'altitude (40) simultanément à l'émission d'une valeur de conduite pour la rotation horizontale du panneau de collecte de lumière solaire vers la gauche vers le conducteur de rotation horizontale (50).
